# EUROPEAN PATENT SPECIFICATION

(11) **EP 0 526 117 B1**
(45) Date of publication and mention of the grant of the patent: **17.11.2004**
(21) Application number: 92306778.9
(22) Date of filing: 23.07.1992
(51) Int. Cl.: C08L 23/02, C08L 71/02, C08K 13/02

(54) **Polymer additive compositions**
Polymer-Additivzusammensetzungen
Compositions d'additifs pour polymères

(30) Priority: 31.07.1991 GB 9116498
(43) Date of publication of application: 03.02.1993
(73) Proprietor: BP Chemicals Limited, London EC2M 7BA (GB)
(72) Inventor: Torkington, John Alexander, BP Chemicals Limited, CH-1217 Meyrin 2 (CH)
(74) Representative: Preece, Michael

(56) References cited:
- EP-A- 0 138 203
- US-A- 4 325 850
- DATABASE WPIL Derwent Publications Ltd., London, GB; AN 89-345364

## Description

This invention relates to polymer additive compositions useful in film processing, in particular for polyolefin film.

Polyolefin films are susceptible to "blocking" in which sheets of film are difficult to separate from one another. To alleviate this, anti-blocking agents eg inorganic ones such as natural or synthetic silicas eg diatomaceous earth and precipitated silica are used. The films are also often difficult to slide over one another and to alleviate this, slip agents such as fatty acid amides are used. We have found that use of large amounts of anti-blocking agent especially synthetic silicas gives films of poor (low) slip, medium slip levels can be obtained but to a variable extent by addition of the fatty acid amides. But in addition to the variation in the latter slip level, use of high levels of the amides may cause printing and adhesion problems with films. US 4325850 discloses a polyolefin film comprising an anti-block agent, a slip agent and plasticicizing oil wherein the anti-block agent is selected from a group which includes colloidal silica, the slip agent is bisamide and the plasticizing oil is chosen from a group which includes polyethylene glycol distearate and polyethylene glycol monostearate. The reference however does not disclose nor suggest the use of polyethylene glycol.

It has now been found that the presence of polyethylene glycol in blends of polyolefins with synthetic siliceous anti-blocking agents and slip agents enables one to use smaller amounts of slip agents while retaining anti-block and slip characteristics.

The present invention provides an additive composition suitable for addition to polyolefins which comprises a synthetic silica as an antiblocking agent, a slip agent and polyethylene glycol. The invention also provides an extrudable olefin polymer composition and a film made therefrom, said olefin polymer composition and film comprising a film forming olefin polymer and said anti-blocking and slip agents and the polyether as slip boosting agent. There is also provided a treated anti-blocking agent, which comprises a synthetic siliceous impregnated with the polyether, and also is provided a synergistic mixture of a slip agent and the polyether.

Finally a further aspect of the present invention is a method of increasing the effectiveness of a slip agent in an additive composition containing a synthetic silica anti-blocking agent for addition to an olefin polymer or in an olefin polymer composition comprising said anti-blocking agent and slip agent, which method comprises adding to said composition the polyether, or alternatively the use of said polyether for increasing that effectiveness.

The additive composition contains at least one synthetic siliceous anti-blocking agent. Synthetic siliceous antiblocking agents include amorphous aqueous precipitated silicas and fumed silicas. The anti-blocking agent usually gives a pH of 2-11 especially 6-8 to 1% by weight aqueous slurries thereof. The anti-blocking agent may be of 0.5-20 micrometres eg 1-3, 3-10 or especially 3-7 micrometres in diameter and have an average surface area of at least 10 such as 10-1000 and especially 100-600 m²/g (determined by BET measurements).

The slip agent is an organic compound (including metal salts thereof) with a significant waxy or long chain hydrocarbon component, and is compatible with the polyolefin. Slip agents may be amides of a fatty mono or di carboxylic acid eg of 8-30 such as 12-24 carbons which may be saturated or ethylenically unsaturated, with ammonia, or mono or diamines eg of 2-10 carbon atoms such as primary alkyl amines or alkylene diamines. Examples of such slip agents are oleamide, behenamide, stearamide, erucamide and NN'alkylene diamine bis stearamide, bis oleamide or bis erucamide. The slip agent may also be a hydrocarbon wax.

The polyethylene glycol may be solid or liquid at room temperature and usually has a molecular weight of 200-1 million eg 800-80,000 especially 2000 - 6000.

The additive composition is used to provide olefin polymer films with slip and anti-block properties.

The olefin polymer is usually made from one or more aliphatic monomers eg alpha olefins of 2 to 10 carbon atoms and can be a homopolymer, or a copolymer obtained from two or more different monomers. Suitable homopolymers are polypropylene and polybutylene but preferably polyethylene. The olefin copolymers are suitably copolymers of two or more monomers which may be solely mono olefins suitably C₂ to C₁₂ olefins (for example, ethylene, propylene, butylene, 4 methyl pentene-1, hexene-1, octene-1 and decene-1) or mixtures of at least one mono olefin with another ethylenically unsaturated monomer eg vinyl alcohol, vinyl acetate and acrylic acid, methacrylic acid and their alkyl esters. Amounts of at least 70% wt of one olefin eg ethylene, propylene or butene with up to 30% wt of one or more other copolymerisable monomers may be used. Particularly preferred are homopolymers and copolymers of ethylene with a higher alpha olefin eg of 3-8 carbon atoms, and especially where the higher alpha olefin content is 0.5-15% by weight of the ethylene in particular linear polyethylene of density 915-970 kg/in³ eg 915-940 kg/in³, in particular linear low density polyethylenes. Medium density polyethylene (930-940 kg/in³) and high density polyethylene (940-965 kg/in³) may also be used. The olefin polymers are preferably made with transition metal catalysts eg of Groups 4A-6A of the Periodic Table especially titanium, and chromium, in particular titanium chloride compounds with organoaluminium cocatalysts and especially on magnesium chloride supports. The Melt Flow Rate (measured according to BS 3412:1976, ASTM D1238E, or IS01133-1981-condition 7 at 190°C with applied load of 2.16 kg of the olefin polymer is usually 0.1-100 g/10 mins.

The amount of synthetic siliceous anti-blocking agent (anti-block) in the olefin polymer composition is usually 200-6000 eg 300-4000 such as 300-2700 or 400-2200 or 400-1700 but especially 1300-3500 or (i) 1800-3100 ppm, while the amount of slip agent is usually 100-2000 such as 200-1500 preferably 300-800 or 800-1500 eg 300-1300 or 400-1200 ppm and the amount of polyethylene glycol is usually 50-5000 ppm such as 200-1500 preferably 300-900 ppm, all based on the weight of the olefin polymer. The additive compositions usually contain the anti-block, slip agent and polyethylene glycol in the above relative amounts but the ratio of the anti-block to slip agent is usually in the range 0.2-10:1 e.g. 0.4-5.5:1 e.g. 4:1 preferably (i) 1.4-2.8:1 or (ii) 0.2-1.4:1 when hydro talcite is present, the ratio is preferably 0.4-10:1. The weight percentage of polyethylene glycol to anti-block is usually at least 5% e.g 15-200% especially (i) 5-50% or (ii) 50-150%; these are also the weight percentages preferred for the treated anti-block agent of this invention. The weight ratio of anti-block to the total of slip agent and polyethylene glycol is usually at least 0.2:1 such as 0.2-5:1 eg 0.2-3.5:1, 0.2-3:1 or 0.2-2:1 especially (i) 0.5-1.6:1 or (ii) 0.2-0.5:1. The weight ratio of slip agent to polyethylene glycol in the olefin polymer composition and in the synergistic mixture is usually 0.2-10:1 such as 0.5-5:1 eg 0.6-3.5:1 or 1-2:1.

The additive composition or olefin polymer composition preferably contains at least one anionic exchanger having an essentially inorganic structure, such as a magnesium aluminium talcite or hydrotalcite or hydrotalcite-like compound which is a basic magnesium aluminum hydroxide carbonate especially as its hydrate, eg such a compound treated with a surface active compound. The exchanger is preferably used in an amount in the polymer composition of eg 10-1000 ppm especially 50-600 ppm of olefin polymer or in percentage amounts in the additive composition or polymer composition in relation to the anti-block of 5-150% eg 5-60% but especially (i) 5-30% or (ii) 30-50%, in relation to erucamide of 5-60% eg 10-55% such as 20-60% or 60-120% and in relation to the polyethylene glycol of 20-200% such as 20-60% or 60-120%. Weight ratios of the total of anti-block and anionic exchanger to slip agent are usually less than 5.5:1, such as less than 4:1 such as 0.4-3.5:1 especially (i) 1.5-3.0:1 or (ii) 0.4-1.5:1, while weight percentages of polyethylene glycol to the total of anti-block and anionic exchanger are usually at least 15%, eg 15-150% especially (i) 15-45% or (ii) 45-100%. The weight percentage of the total of anti-block and anionic exchanger to the total of polyethylene glycol and slip agent is usually 20-350% eg 20-250% especially (i) 90-200% or (ii) 20-90%.

The total weight of anti-block and anionic exchanger in the polymer composition is preferably at most 3500 ppm (based on olefin polymer); this figure is the maximum for the total of all inorganic particulate solids. In the above information on proportions, those marked (i) relate primarily to polymer compositions of medium or high slip for use preferably with linear low density polyethylene of density 916-924 kg/in³ or high pressure low density polyethylene, and usually have high anti-block level and yet this slip is achieved without use of excessive amounts of slip agent, because of the large slip boosting effect of the polyether under these conditions. Those proportions marked (ii) relate primarily to compositions of high slip level and especially low anti-block level particularly with linear low density polyethylene of density 924-935 kg/in³, the slip level being achieved with use of smaller amounts of slip agents. We have found that the presence of the anionic inorganic exchanger exacerbates problems of poor and variable slip in polymer compositions of medium and high slip, especially with high anti-block levels, in the absence of the polyether, but that the presence of the polyether can reduce these problems.

Other additives may be present in the additive composition or olefin polymer composition, such as those commonly used in olefin polymer based film compositions such as antioxidants especially phenolic and/or phosphite and/or phosphonite and/or thio ether antioxidants, catalyst neutralizers such as metal fatty acid salts such as calcium stearate eg in amount of 100-1000 ppm (of olefin polymer), fillers, pigments, plasticisers and processing aids such as the metal fatty acid salts eg zinc, calcium or magnesium salts of fatty acids preferably of 8-20 carbons (especially stearic acid) and fluoropolymers.

The olefin composition may be made from its components by blending in any order, preferably by blending the anti-block, slip agent, polyether (and antioxidant if present) directly with the olefin polymer, or alternatively with an inert thermoplastic polymer to form a masterbatch for subsequent blending or compounding with the olefin polymer. The inert polymer is compatible with the olefin polymer and may be a low density polyethylene or ethylene vinyl acetate or ethylene ethyl acrylate copolymer. The masterbatch composition may contain 10-50 or 30-50 parts by weight (based on the weight of inert polymer) of the additive composition described above. The polymeric compositions of the invention including the masterbatch concentrate may be made by blending the polymer component or components with the other ingredients in an extruder eg a single or twin one, blender or mill. Other ingredients which are liquid may be absorbed into the polymer granules, with elevated temperature and/or use of intensive mixing to increase the rate of absorption of liquids. The mixing is preferably performed in a closed system with substantial exclusion of air. If desired the components of the additive composition may be mixed dry and the composition obtained blended with the olefin polymer.

Preferably however in another aspect of the present invention, the polyether may be premixed with the synthetic silica antiblocking agent, eg by absorption of a liquid onto the silica or by melt mixing, before the mixing with the other ingredients. The olefin compositions and hence films derived from the solid premixed product can have higher slip (lower coefficients of friction) than in the case of compositions (and hence films) made from mixing all the ingredients directly and separately with the olefin polymer or inert polymer (if present).

The polyolefin composition may be moulded or extruded to form shaped articles, such as fibres, pipes, bottles and other containers or used for coating purposes, but are preferably formed into films for use as such or in multicomponent laminates.

The polyolefin composition of the invention may be formed into films by methods known in the art e.g. by extrusion or blow moulding

The invention is illustrated in the following Examples in which the following materials are used.

Polyolefins used were linear low density ethylene alpha olefin copolymers containing Ti, Al and Cl residues of the following description.

| Polymer | Alpha olefin | Spec Gravity | Melt Index |
|---|---|---|---|
| A | 4-methyl pentene-1 | 0.920 | 0.9 |
| B | 4-methyl pentene-1 | 0.927 | 0.6 |
| C | butene | 0.920 | 0.9 |
| D | 4-methyl pentene-1 | 0.920 | 0.6 |

The Melt Index was measured in g/10 mins at 190°C according to ASTMD 1238 Condition E. The polyolefins contained a commercial phenolic antioxidant and commercial phosphonite antioxidant in conventional amounts. In each case formulations were made which also contained 500 ppm of calcium stearate as a catalyst neutralizer, 30 ppm of talc and 300 ppm of a fluoropolymer processing aid, which was a solid fluoroelastomer which together with the talc were sold by 3M Company under the Trade Mark FX9613. Also present were variable amounts of an anionic exchanger which was a surface active agent treated hydrotalcite like compound of formula Mg_{4.5} Al₂(OH)₁₃ CO₃.3.5H₂O of particle size 0.1-0.2 micrometres sold by Kyowa Chem Ind Co under the Trade Mark DHT 4A, variable amounts of erucamide as slip agent, a synthetic precipitated silica as antiblock agent of average particle size 5 microns and surface area 400 m²/g sold by W R Grace under the Trade Mark SYLOBLOCK 47, and the polyethylene glycol (PEG) with an average molecular weight of 3200.

Except in the case of Ex 2 the ingredients were blended dry in the proportions quoted below and then mixed with molten polyolefin in an extruder attached directly to a Betol film extrusion line. In Ex 2 all the PEG was melted with all the silica to give a premixed product before addition thereof to the other ingredients. The extruder had 8 sections with an initial temperature profile of 180 °C and thereafter 190 °C, a screw diameter of 40 mm.

The molten polymer from the extruder passed at 10 kg/hr to a die and then into a Betol trapped bubble blow moulding film production apparatus in which the polymer was extruded into a molten tube by an annular die, expanded into a film tube of 38 micrometres gauge by compressed air fed through the die centre, the film tube cooled externally to cause solidification with a frost line 60 mm above the air ring and the cooled tube guided by guide rolls, collected by pinch rolls and wound up on a driven haul - up roller. The film was then tested for its Coefficient of Friction according to ASTM D1894 and also tested for its Blocking properties according to BP test DTP453 by determination of the Induced Blocking Force in layers of film, after they had been subjected to a force of 7250 N/m² acting on superimposed layers of film at 60°C for 72 hr.

### Examples 1, 2

Amounts of the components in the polymer composition which was based on polymer A were 250 ppm of anionic exchanger,1000 ppm of erucamide with variable amounts of anti-blocking agent (silica) and polyethylene glycol (PEG).

The results were as follows with the amounts of additive expressed as parts per million of olefin polymer and the blocking results expressed in Newtons.

| Amount of silica ppm | Comparative A 0 ppm PEG | Example 1 670 ppm PEG | Example 2 670 ppm PEG premixed with silica |
|---|---|---|---|
| Coefficient of Friction | | | |
| 1000 | 0.23 | 0.16 | 0.16 |
| 1500 | 0.21 | 0.17 | 0.17 |
| 2000 | 0.28 | 0.20 | 0.14 |
| 2500 | 0.37 | 0.21 | 0.17 |

| Blocking (N) | | | |
|---|---|---|---|
| 1000 | 1.2 | 0.45 | 0.62 |
| 1500 | 0.75 | 0.46 | 0.52 |
| 2000 | 0.43 | 0.28 | 0.49 |
| 2500 | 0.24 | 0.18 | 0.39 |

### Example 3

The process of Ex 1 was repeated with a different linear low density polyethylene (polymer B) and a different amount of the silica (600 ppm) and erucamide (1200 ppm). The coefficient of Friction was 0.16.

### Examples 4-6

The process of Ex 1 is repeated with different low density polyethylenes, and different amounts of the silica, erucamide, DHT4A and polyethylene glycol. The compositions are as follows.

| Amounts in polymer composition ppm | | | | | |
|---|---|---|---|---|---|
| Example | Polymer | Silica | Erucamide | DHT4A | PEG |
| 4 | B | 600 | 1200 | 500 | 400 |
| 5 | C^{x} | 700 | 550 | 250 | 550 |
| 6 | D | 2000 | 1200 | 250 | 670 |

| | | | | | |
|---|---|---|---|---|---|
| ^{x}Polymer C was blended in a 90:10 weight ratio with a high pressure low density polyethylene of density 922 kg/m³ and Melt Index of 2.0. | | | | | |

Films with good slip and anti-blocking properties are obtained.

## Claims

1. An additive composition suitable for addition to polyolefins which comprises a synthetic silica as an antiblocking agent, a slip agent and polyethylene glycol.

2. An additive composition as claimed in claim 1 wherein the synthetic silica is an amorphous aqueous precipitated silica or a fumed silica.

3. An additive composition as claimed in either claim 1 or claim 2 wherein the silica has an average surface area of 100-600m²/g.

4. An additive composition as claimed in any one of the preceding claims wherein the silica and the polyethylene glycol in the liquid state are mixed together before mixing with the other ingredient or ingredients of the additive composition.

5. An additive composition as claimed in any one of the preceding claims wherein the polyethylene glycol has a molecular weight in the range 2,000-6,000.

6. An additive composition as claimed in any one of the preceding claims wherein the composition further comprises a magnesium aluminium talcite or hydrotalcite.

7. An extrudable polymer composition comprising a major amount of a polyolefin and a minor amount of an additive composition as claimed in any one of the preceding claims.

8. An extrudable polymer composition according to claim 7 wherein the silica is present in the additive composition in an amount from 200-2700 ppm based on the weight of the olefin polymer.

9. An extrudable polymer composition according to claim 7 wherein the polyethylene glycol is present in the additive composition is an amount in the range 200 to 1500 ppm based on the weight of the olefin polymer.

10. An extrudable polymer composition according to claim 9 wherein the polyethylene glycol is present in the composition in an amount in the range 300 to 900 ppm based on the weight of the olefin polymer.

11. An extrudable polymer composition according to claim 7 wherein the slip agent is present in the additive composition in an amount in the range 400 to 2000 ppm.

12. An extrudable polymer composition according to claim 7 wherein the magnesium aluminium talicta or hydrotaclite is present in the composition is an amount in the range 50-600 ppm based on the weight of the olefin polymer.

13. An extrudable polymer composition as claimed in claim 7 wherein the polyolefin is a linear low density polyethylene.

14. A film made from an extrudable polymer composition as claimed in either claim 7 or claim 13.

## Patentansprüche

1. Additivzusammensetzung, geeignet für die Zugabe zu Polyolefinen, die ein synthetisches Siliziumdioxid als ein Antiblockiermittel, ein Gleitmittel und Polyethylenglycol umfasst.

2. Additivzusammensetzung nach Anspruch 1, worin das synthetische Siliziumdioxid ein amorphes, wässriges, ausgefälltes Siliziumdioxid oder ein pyrogenes Siliziumdioxid darstellt.

3. Additivzusammensetzung nach entweder Anspruch 1 oder Anspruch 2, worin das Siliziumdioxid eine mittlere Oberfläche von 100-600 m²/g aufweist.

4. Additivzusammensetzung nach einem der vorangehenden Ansprüche, worin das Siliziumdioxid und das Polyethylenglycol im flüssigen Zustand vor dem Vermischen mit dem anderen Bestandteil oder den anderen Bestandteilen der Additivzusammensetzung miteinander vermischt werden.

5. Additivzusammensetzung nach einem der vorangehenden Ansprüche, worin das Polyethylenglycol ein Molekulargewicht im Bereich von 2 000 - 6 000 aufweist.

6. Additivzusammensetzung nach einem der vorangehenden Ansprüche, worin die Zusammensetzung weiterhin ein Magnesiumaluminiumtalcit oder -hydrotalcit umfasst.

7. Extrudierbare Polymerzusammensetzung, umfassend eine Hauptmenge eines Polyolefins und eine geringe Menge einer Additivzusammensetzung nach einem der vorangehenden Ansprüche.

8. Extrudierbare Polymerzusammensetzung nach Anspruch 7, . worin das Siliziumdioxid in der Additivzusammensetzung in einer Menge von 200 - 2700 ppm, bezogen auf das Gewicht des Olefinpolymers, vorliegt.

9. Extrudierbare Polymerzusammensetzung nach Anspruch 7, worin das Polyethylenglycol in der Additivzusammensetzung in einer Menge im Bereich von 200 bis 1500 ppm, bezogen auf das Gewicht des Olefinpolymers, vorliegt.

10. Extrudierbare Polymerzusammensetzung nach Anspruch 9, worin das Polyethylenglycol in der Zusammensetzung in einer Menge im Bereich von 300 bis 900 ppm, bezogen auf das Gewicht des Olefinpolymers, vorliegt.

11. Extrudierbare Polymerzusammensetzung nach Anspruch 7, worin das Gleitmittel in der Additivzusammensetzung in einer Menge im Bereich von 400 bis 2000 ppm vorliegt.

12. Extrudierbare Polymerzusammensetzung nach Anspruch 7, worin das Magnesiumaluminiumtaicit oder -hydrotalcit in der Zusammensetzung in einer Menge im Bereich von 50 bis 600 ppm, bezogen auf das Gewicht des Olefinpolymers, vorliegt.

13. Extrudierbare Polymerzusammensetzung nach Anspruch 7, worin das Polyolefin ein linear niederdichtes Polyethylen darstellt.

14. Folie, hergestellt aus einer extrudierbaren Polymerzusammensetzung nach entweder Anspruch 7 oder Anspruch 13.

## Revendications

1. Composition d'additif adaptée pour une addition à des polyoléfines qui comprend une silice synthétique comme agent anti-blocage, un agent de glissement et du polyéthylène glycol.

2. Composition d'additif selon la revendication 1 dans laquelle la silice synthétique est une silice précipitée aqueuse amorphe ou une silice pyrogénée.

3. Composition d'additif selon la revendication 1 ou la revendication 2 dans laquelle la silice a une surface spécifique moyenne de 100 à 600 m²/g.

4. Composition d'additif selon l'une quelconque des revendications précédentes, dans laquelle la silice et le polyéthylène glycol à l'état liquide sont mélangés ensemble avant le mélange avec le ou les autres ingrédients de la composition d'additif.

5. Composition d'additif selon l'une quelconque des revendications précédentes, dans laquelle le polyéthylène glycol a une masse moléculaire dans la plage de 2000 à 6000.

6. Composition d'additif selon l'une quelconque des revendications précédentes, dans laquelle la composition comprend en outre une talcite d'aluminium magnésium ou une hydrotalcite.

7. Composition de polymère extrudable comprenant une quantité majeure d'une polyoléfine et une quantité mineure d'une composition d'additif comme revendiqué selon l'une quelconque des revendications précédentes.

8. Composition de polymère extrudable selon la revendication 7, dans laquelle la silice est présente dans la composition d'additif en une quantité de 200 à 2700 ppm par rapport au poids du polymère d'oléfine.

9. Composition de polymère extrudable selon la revendication 7, dans laquelle le polyéthylène glycol est présent dans la composition d'additif en une quantité dans la plage de 200 à 1500 ppm par rapport au poids du polymère d'oléfine.

10. Composition de polymère extrudable selon la revendication 9, dans laquelle le polyéthylène glycol est présent dans la composition en une quantité dans la plage de 300 à 900 ppm par rapport au poids du polymère d'oléfine.

11. Composition de polymère extrudable selon la revendication 7, dans laquelle l'agent de glissement est présent dans la composition d'additif en une quantité dans la plage de 400 à 2000 ppm.

12. Composition de polymère extrudable selon la revendication 7, dans laquelle la talcite d'aluminum-magnésium ou l'hydrotalcite est présente dans la composition en une quantité dans la plage de 50 à 600 ppm par rapport au poids du polymère d'oléfine.

13. Composition de polymère extrudable selon la revendication 7, dans laquelle la polyoléfine est un polyéthylène faible densité linéaire.

14. Film fabriqué à partir d'une composition de polymère extrudable selon la revendication 7 ou la revendication 13.
